# EUROPÄISCHE PATENTSCHRIFT

(11) **EP 2 036 701 B1**
(45) Veröffentlichungstag und Bekanntmachung des Hinweises auf die Patenterteilung: **03.10.2012**
(21) Anmeldenummer: 07017782.9
(22) Anmeldetag: 11.09.2007
(51) Int. Cl.: B29C 70/08, D04H 13/00, D04H 1/52, B32B 5/26

(54) **Schichtstruktur sowie Verfahren und Vorrichtung zur Herstellung einer Schichtstruktur**
Layered structure and method and device for manufacturing a layered structure
Structure stratifiée, ainsi que son procédé et dispositif de fabrication

(43) Veröffentlichungstag der Anmeldung: 18.03.2009
(73) Patentinhaber: Perick Management GmbH, 99976 Anrode/Lengefeld (DE)
(72) Erfinder: Perick, Dieter, 48485 Neuenkirchen (DE); Berndt, Axel, 09212 Limbach-Oberfrohna (DE)
(74) Vertreter: Steiniger, Carmen

(56) Entgegenhaltungen:
- EP-A- 0 395 548
- EP-A- 0 745 716
- EP-A- 1 772 258
- WO-A-02/076701
- WO-A-2005/049906
- DE-A1- 10 051 598
- DE-C1- 10 211 175

## Beschreibung

Die vorliegende Erfindung betrifft eine Schichtstruktur zur Herstellung von Faserverbundmaterialien sowie ein Verfahren zum Herstellen einer solchen Schichtstruktur.

Schichtstrukturen der oben genannten Gattung sind beispielsweise im Stand der Technik als Schichtfolge von Mehrschichtstrukturen bekannt, können jedoch auch als Einzelschicht Verwendung finden.

Aus der Druckschrift DE 100 51 598 A1 ist eine Schichtstruktur und ein Verfahren der oben genannten Gattung bekannt, wobei auf eine Lage von Glasfasern eine voluminöse Wirrfaserlage aufgebracht wird, die anschließend mit der Glasfaserschicht locker vernadelt wird, wobei auf die voluminöse Wirrfaserlage eine weitere Glasfaserschicht aufgebracht wird und dieses Gesamtprodukt dann vernäht wird. Die hiermit hergestellte Struktur wird als textile Armierung vorgeschlagen, welche mit Harz getränkt werden kann, wobei durch den Aufbau der Zwischenschicht ein guter Harzfluss gewährleislet wird und hohe Festigkeiten als auch eine glatte Oberfläche für das Endprodukt zur Verfügung gestellt werden.

Werden bei der aus der Druckschrift DE 100 51 598 A1 bekannten Schichtstruktur Kunststoff-Filamente für die Kernlage verwendet, bilden diese zwischen den Glasfaserschichten, die die eigentlichen Verstärkungsfasern in der Schichtstruktur ausbilden, als Fremdkörper eine separate Trennlage. Daraus resultieren Probleme in Bezug auf die Festigkeit der aus der Schichtstruktur hergestellten Formkörper.

Schichtstrukturen, wie sie in der Druckschrift DE 100 51 598 A1 beschrieben sind, werden in der Praxis beispielsweise als Strukturen vertrieben, welche einen zwischen zwei Glasfaserschnittmatten angeordneten voluminösen Kern aus Chemiefasern, wie Polyester- oder Propylenfasem, haben. Dabei sind die Polyester- oder Propylenfasern im Kern reine Füllstoffe, die die Aufgabe haben, Harz in einer Zeiteinheit durchzulassen bzw. aufzunehmen. Eine Verstärkungswirkung wird durch die Polyester- oder Propylenfasem nicht erzielt sondern nur durch die oben und unten angeordneten Glasfaserschnittmatten, die die Oberflächenstruktur bündeln.

Die Druckschrift DE 102 11 175 C1 offenbart eine textile Armierung zur Herstellung von Verbundmaterial mit einer oberen und einer unteren textilen Deckschicht und einer dazwischen angeordneten voluminösen, leichten und durchlässigen Zwischenschicht, wobei die Deckschichten mit der Zwischenschicht verbunden sind und die Zwischenschicht aus synthetischen Fasern gebildet wird. Es wird vorgeschlagen, dass die Fasern der Zwischenschicht eine spiral- oder wendelförmige Texturierung aufweisen. Durch diese Ausbildung soll ein geringerer Widerstand gegen den Harzfluss erreicht und ein erforderliches Volumen mit ausreichender Druckbeständigkeit ohne Erhöhung des Flächengewichtes sichergestellt werden.

Bei Verwendung der vorgeschlagenen spiral- oder wendelförmigen Fasern besteht das Problem, dass die hergestellte Schichtstruktur, auch Komplexmaterial genannt, durch die hohe Materialverdichtung zu wesentlich höheren spezifischen Gewichten führt, als dies für die meisten Formteile gewünscht wird.

Zudem weisen die aus dem Stand der Technik bekannten Schichtstrukturen den Nachteil auf, dass es bei geringer Verpressung in der Form zu sehr hohen und unerwünschten Harzanreicherungen im Kernbereich kommen kann und bei zu hoher Verpressung die Entlüftung und Durchflussgeschwindigkeit nachteilhaft stark reduziert wird.

Auch sind die bekannten mehrschichtigen Matten dahingehend nachteilig, dass die vernadelten oder gewirkten Mittellagen bzw. Kernlagen in einem separaten maschinellen Arbeitsprozess hergestellt werden müssen, so dass die Herstellung aufwändig und kostenintensiv ist.

Aus der Druckschrift WO 02/076701 A1 ist ein Verstärkungsmaterial für Duroplaste bekannt, das aus volumisierten Fasern ausgebildet ist, die in Form einer Matte oder eines Geleges zusammengefasst sind. Die volumisierten Fasern werden hierbei durch Einlagerung von Hohlkügelchen ausgebildet, welche durch Temperatureinwirkung aufgebläht werden. Mit dem vorgeschlagenen Verstärkungsmaterial sollen gute Tränkungs- und Entlüftungseigenschaften bei geringer Harzaufnahme erzielt werden.

Die Druckschrift DE 690 03 436 T2 offenbart eine Textilarmierung für die Herstellung von Formteilen als Verbundstoff. Hier werden dauerhaft ondulierte, das heißt durch thermische Behandlung gekräuselte Fasern geschnitten und durch eine Karde in eine Lagenform gebracht, wobei diese Lage zum Ausbilden einer Zentralschicht zwischen zwei textilen Verstärkungslagen verwendet wird, woraufhin die Lagen miteinander durch Vernähen bzw. Verstricken verbunden werden.

Die Druckschrift DE 35 40 537 A1 beschreibt ein Verstärkungsmaterial für Duroplaste und ein Verfahren zu seiner Herstellung, wobei Hohlkörperfüllstoffe in die Zwischenräume von Fasern eines Gewebes, Gewirkes oder Geleges aus Fasern mit hohem Elastizitätsmodul eingelagert werden. Hierfür wird zunächst eine ungeblähte Vorstufe eines Hohlkörperfüllstoffs in die Faserzwischenräume eingebracht und das so erhaltene Material nachfolgend durch eine Temperaturbehandlung aufgebläht. Bei dem beschriebenen Verstärkungsmaterial wird die Volumisierung deshalb vorgesehen, um die Aufnahmefähigkeit für flüssige härtbare Harze auf einen gewünschten Wert einstellen zu können und somit Duroplast Leichtlaminate herstellen zu können.

Dagegen ist es die Aufgabe der vorliegenden Erfindung, eine Schichtstruktur und ein Verfahren zum Herstellen einer Schichtstruktur für die Herstellung von Faserverbundmäterialien zur Verfügung zu stellen, bei welchen die mechanischen Eigenschaften der Schichtstruktur verbessert werden können und insbesondere eine Schichtstruktur mit guten elastischen Eigenschaften sowie Rückstellspannungen zur Verfügung gestellt werden kann. Darüber hinaus soll die Harzaufnahme der hergestellten Schichtstruktur gering sein, um mit der Schichtstruktur kostengünstige Produkte fertigen zu können.

Die Aufgabe wird zum Einen durch eine Schichtstruktur zur Herstellung von Faserverbundmaterialien gelöst, wobei die Schichtstruktur eine Schicht aufweist, die durch Kardieren volumisierte Glasfasern aufweist, wobei die Schicht textilmechanisch verfestigt ist.

Dabei ist unter textilmechanischer Verfestigung eine mechanische Verfestigung mittels textiltechnologischer Verfahren, wie Nähen, Vernadeln, Wirken oder Stricken zu verstehen, wobei jegliche dafür geeignete textiltechnologische Vorrichtungen zum Einsatz kommen können. Die erfindungsgemäße Schichtstruktur stellt auf überraschend einfache Welse eine als Einzelschicht aber auch als Schichtfolge verwendbare Struktur zur Verfügung, welche nicht nur sehr gute Eigenschaften aufweist sondern auch durch die mechanisch volumisierten Fasern bei einer späteren Verarbeitung eine geringere Harzaufnahme im Verhältnis zum Volumen der Schichtstruktur besitzt, wodurch die mittels der erfindungsgemäßen Schichtstruktur hergestellten Produkte Kostenvorteile auf sich vereinen. Da die Volumisierung der Fasern erst beim Kardieren erfolgt, können als Ausgangsmaterialien für das erfindungsgemäße Verfahren einfache Fasern verwendet werden, welche lediglich vor dem Kardieren geschnitten werden müssen, aber sonst keine Vorbehandlung erfordem. Das mechanische Volumisieren der Fasern durch die Karde erfordert zudem keine Temperaturbehandlung wie beispielsweise bei dem im Stand der Technik beschriebenen Ondulieren von Fasern und schädigt damit auch nicht die Fasern dauerhaft, wie es beim Ondulieren der Fall ist. Beim Kardieren werden die Fasern nicht nur volumisiert sondern erhalten auch eine Vorzugsausrichtung in Bewegungsrichtung der Walzen der Karde, so dass das beim Kardieren erzeugte Faservlies eine besonders hohe Stabilität besitzt.

In einer vorteilhaften Weiterbildung der Erfindung sind zwischen den Fasern Füllstoffe eingelagert. Durch die volumisierten Fasern und die zusätzlich in der Schicht vorgesehenen Füllkörper kann die Schicht ein großes Volumen annehmen, ohne dass es zu einem beträchtlichen Gewichtszuwachs kommt. Somit kann die erfindungsgemäße Schichtstruktur eine vorteilhafte Verstärkungswirkung zur Verfügung stellen und dennoch leicht sein. Da durch die eingebetteten Füllkörper ein Großteil der Zwischenräume zwischen den Fasern der Schicht ausgefüllt werden kann, wird bei einer nachfolgenden Tränkung der Schichtstruktur mit Harz weniger Harz in den Zwischenräumen eingelagert, was wiederum zu einer Verringerung des Gewichts der hergestellten Schichtstruktur führt.

Die erfindungsgemäße Schichtstruktur besitzt ferner den Vorteil, dass sie in kontinuierlicher Abfolge auf einer Anlage herstellbar ist.

Gemäß einer vorteilhaften Ausführungsform der vorliegenden Erfindung weist die Schicht volumisierte Spinnfäden, Garne und/oder Zwirne auf. Die durch die eingebauten Füllstoffe expandierten, aus Spinnfäden, Garnen und/oder Zwirnen ausgebildeten Faserstränge haben trotz ihrer zweidimensionalen Anordnung eine hohe Elastizität und Rückstellspannung, so dass eine große und offene Materialstruktur entsteht, welche vorteilhafte Entlüfturigs- und Harzdrainageeigenschaften zur Verfügung stellt

Es ist besonders günstig, wenn die volumisierten Fasern Glasfasern sind. Diese Fasern eignen sich besonders gut für eine Volumisierung, welche vorzugsweise mechanisch an einer Kardiervorrichtung erfolgt.

Entsprechend einer vorteilhaften Variante der Erfindung sind die volumisierten Fasern aus geschnittenen Fasern mit einer Schnittlänge von etwa 5 mm bis etwa 200 mm ausgebildet. Solche Schnittlängen lassen sich in der Praxis einfach realisieren und sind besonders gut für ein nachfolgendes Kardieren der Fasern geeignet. Je länger die geschnittenen Fasern, umso besser ist die Festigkeit und der E-Modul der erzeugten Schichtstruktur. Als besonders geeignet haben sich Schnittlängen von etwa 75 mm erwiesen.

In einem günstigen Beispiel der Erfindung weist die Schicht volumisierte und nichtvolumisierte Fasern auf. Somit können in der Schichtstruktur unterschiedliche Faserstärken zur Verfügung gestellt werden, wodurch der Verstärkungsgrad in der Schichtstruktur gesteuert werden kann.

Entsprechend einer weiteren Ausführungsform der Erfindung ist die Schicht aus einem kardierten Vlies ausgebildet, in welchem Füllstoffe eingelagert sind, wobei das Endprodukt ein Wirkvlies darstellt. Das kardierte Vlies lässt sich besonders günstig an einer herkömmlichen Kardiervorrichtung bzw. einem Krempel herstellen, wodurch eine besonders vorteilhafte Volumisierung und Ausrichtung der Fasern erreicht wird. Entsprechend können in das kardierte Vlies besonders günstig die Füllstoffe eingelagert werden. Dies kann beispielsweise dadurch realisiert werden, dass die Füllstoffe auf das Vlies aufgebracht werden, wonach diese durch ihre eigene Schwerkraft in das Vlies eindringen. Bei dem textilmechanischen Verfestigen werden die Füllstoffe endgültig in dem Vlies eingelagert. Somit lässt sich eine hochstabile und dennoch elastische Schichtstruktur herstellen.

Es ist besonders bevorzugt, wenn die Fasern der Schicht vorwiegend in einem Winkel von etwa 90° zu einer Transportrichtung der Schicht beim textilmechanischen Verfestigen der Schichtstruktur ausgerichtet sind. Durch die Orientierung in der 90°-Richtung erhält die hergestellte Schichtstruktur gezielt eine hohe Festigkeit in der 90°-Richtung, wodurch die erfindungsgemäße Schichtstruktur insbesondere gegenüber solchen Schichten von Vorteil ist, die lediglich als Füllschichten verwendet werden und keine Orientierung und damit keine Verstärkungswirkung aufweisen.

Vorzugsweise umfassen die Füllstoffe Mikrohohlkörper, Polypropylen-, Polyester- und/oder Glaskugeln oder Naturfasern. Diese Stoffe lassen sich besonders gut zwischen den Fasern der Schicht der Schichtstruktur einlagern.

Beispielsweise können als Füllstoffe aufgeblähte oder aufblähbare Füllkörper verwendet werden. So können beispielsweise Mikrohohlkugeln verwendet werden, die durch Zufuhr von Wärme aufgebläht werden können. Durch solche Mikrohohlkugeln kann die Schichtstruktur mit einer hohen Elastizität und Rückstellspannung zur Verfügung gestellt werden, wobei auf Druck ein hoher hydraulischer Gegendruck erzeugt wird, der durch die Deformierung der Mikrohohlkörper erreicht wird. Dieser Gegendruck reicht aus, um außenliegende, der Verstärkung dienende Fasern an Formwände anzupressen. Die eingebetteten Füllstoffe reduzieren außerdem den Harzverbrauch deutlich im Vergleich zu bisher bekannten mehrschichtigen Matten. Dies bedeutet eine beträchtliche Reduzierung des spezifischen Gewichtes im Vergleich zu den bisher bekannten Komplexmatten.

Vorzugsweise weisen die Füllstoffe einen Durchmesser von etwa 10 µm bis etwa 300 µm auf. Hierdurch können sich die Füllstoffe besonders gut zwischen den Fasern der Schicht einlagern, um Zwischenräume auszufüllen.

In einer weiteren Ausführungsform der vorliegenden Erfindung sind in der Schicht Zwischenräume mit Harz oder einem anderen härtbaren Material aufgefüllt. Durch das Harz oder das andere härtbare Material, wie beispielsweise ein anderer härtbarer Kunststoff, werden die Fasern und Füllstoffe der Schicht fixiert und der Schichtstruktur eine geeignete Festigkeit zur Verfügung gestellt.

Es ist besonders günstig, wenn die Schicht auf einer Faserunterlage angeordnet ist. Die Faserunterlage stellt dabei für die Schichtstruktur bzw. das Endprodukt eine geeignete Stabilisierung zur Verfügung.

Es hat sich außerdem als vorteilhaft erwiesen, wenn auf der Schicht eine Faserdecklage vorgesehen ist. Durch die Faserdecklage wird der Schichtstruktur bzw. dem Endprodukt eine zusätzliche Festigkeit verliehen. Außerdem können durch die obenliegende Faserdecklage die Oberflächeneigenschaften der Schichtstruktur eingestellt werden.

Es ist ganz besonders von Vorteil, wenn die Schicht als eine Mittelschicht zwischen einer Faserunterlage und einer Faserdecklage angeordnet ist, wobei die Faserunterlage, die Mittelschicht und die Faserdecklage aus Glasfasern ausgebildet sind. Somit kann eine Mehrschichtstruktur mit der Charakteristik eines Voll-Laminats erzeugt werden, das gleichzeitig die gewichtsreduzierenden Eigenschaften eines Sandwichlaminats hat. Da bei der vorgeschlagenen Mehrschichtstruktur die Faserdecklagen und die Mittelschicht aus dem gleichen Grundmaterial, nämlich Glasfasern, bestehen, kann eine besonders gute Verstärkungswirkung erzielt werden, da die Glasfasern in der Mittelschicht, im Gegensatz zum Stand der Technik, keine Fremdkörper im Vergleich zu den Glasfasern der Decklagen sind. Entsprechend kann aus einer so ausgebildeten Mehrschichtstruktur ein Formkörper mit besonders hoher Festigkeit hergestellt werden. Indem die Kernlage bzw. Mittelschicht als auch die Decklagen bzw. Deckschichten aus Glasfasern ausgebildet sind, lässt sich eine bisher unerreichte Homogenität der erfindungsgemäßen Schichtstruktur erzielen. Die physikalisch-mechanischen Eigenschaften der Mittelschicht entsprechen dann den physikalisch-technischen Eigenschaften der Deckschichten.

Wird beispielsweise als Mittelschicht ein Glasvlies verwendet, das zwischen zwei Glasfaserschnittmatten als Faserdecklagen angeordnet ist, können die Glasfasern in dem Glasvlies gerichtet abgelegt werden, wodurch neben der oben erwähnten guten Verstärkungswirkung durch das Glasvlies noch dazu eine hohe Stabilität und Flexibilität der erzeugten Mehrschichtstruktur erzielt werden kann.

Dle Faserunterlage und/oder die Faserdecklage sind vorzugsweise aus Spinnfaden. Garnen und/oder Zwirnen ausgebildet. Somit lassen sich sehr homogene Unter- bzw. Decklagen für die Herstellung einer Mehrschichtstruktur erzeugen.

Entsprechend einer weiteren Ausführungsform der Erfindung sind die Faserunterlage und/oder die Faserdecklage aus geschnittenen Spinnfaden mit einem Flächengewicht von etwa 250 g/m² bis etwa 300 g/m² ausgebildet. Auf diese Weise kann eine ausreichend stabile Mehrschichtstruktur mit einem vergleichsweise geringen Gewicht hergestellt werden.

Die Aufgabe der Erfindung wird ferner durch ein Verfahren zum Herstellen einer Schichtstruktur für die Herstellung von Faserverbundmaterialien gelöst, wobei Glasfasern durch Kardieren volumisiert und als eine Schicht abgelegt werden und die Schicht textilmechanisch, beispielsweise durch Nahen, Vernadeln, Wirken oder Stricken, verfestigt wird.

Mit dem erfindungsgemäßen Verfahren kann auf einfache Weise eine Schichtstruktur zur Herstellung von Faserverbundmaterialien mit einer sehr guten Festigkeit zur Verfügung gestellt werden.

In einer vorteilhaften Variante des erfindungsgemäßen Verfahrens werden zwischen die Fasern der Schicht Füllstoffe eingebracht und die mit den Füllstoffen versetzte Schicht textilmechanisch verfestigt. Durch das Einbetten der Füllstoffe kann der Harzantell der Schichtstruktur beim Tranken mit flüssigen hartbaren Harzen gezielt beeinflusst werden. Darüber hinaus können Insbesondere die elastischen Eigenschaften der Schichtstruktur durch die Einbettung der Füllstoffe verbessert werden.

In einem favorisierten Beispiel der vorliegenden Erfindung werden die Fasern vor ihrem Volumisieren durch eine Schneideinrichtung geschnitten. Hierdurch können die Fasern besonders gut volumisiert werden und ein kardiertes Vlies hergestellt werden, in welches die Füllstoffe besonders gut eingebracht werden können.

Vorzugsweise werden hierbei die Fasern auf eine definierte Lange geschnitten, wodurch beim Kardieren ein besonders homogenes Vlies entsteht.

Des Weiteren ist es ganz besonders vorteilhaft, wenn die geschnittenen Fasern vor ihrem Volumisieren einer Kardiervorrichtung über die gesamte Arbeitsbreite der Kardiervorrichtung vorgelegt werden. Durch das einheitliche Vorlegen und definierte Faserlängen kann ein kardiertes Vlies mit definierten Eigenschaften hergestellt werden.

In einer bevorzugten Variante der Erfindung werden die Fasern vor dem textilmechanischen Verfestigen vorwiegend in eine Ausrichtung von etwa 0° oder etwa 90° zu einer Transportrichtung der Schicht beim Verfestigen der Schichtstruktur gebracht. Entsprechend können längs- aber auch querorientierte Vliese hergestellt werden, die in die erfindungsgemäße Schichtstruktur eingebunden werden können, wodurch eine besonders hohe Festigkeit der Schichtstruktur in 0°- bzw. in 90°-Richtung erzielt werden kann.

Es ist zudem von Vorteil, wenn die Schicht getäfelt abgelegt wird. Auf diese Weise kann ein hohes Schichtvolumen erzeugt werden, in welchem die Füllstoffe besonders günstig eingelagert werden können, wodurch die hergestellte Schichtstruktur besonders stabil wird.

In einem günstigen Ausführungsbeispiel der vorliegenden Erfindung wird die Schicht auf eine Faserunterlage abgelegt. Die Faserunterlage stellt hierbei eine Stabilisierung für die Schichtstruktur bzw. das Endprodukt zur Verfügung.

Es ist auch von Vorteil, wenn auf die Schicht vor dem textilmechanische Verfestigen eine Faserdecklage aufgebracht wird. Die Faserdecklage stabilisiert die Schichtstruktur bzw. das Endprodukt und kann zudem eine definierte Oberfläche für die Schichtstruktur bereitstellen.

Entsprechend einer weiteren vorteilhaften Variante der Erfindung werden die Füllstoffe durch eine Füllstoffaufbringvorrichtung auf die abgelegte Schicht gestreut. Hiermit können die Füllstoffe dosiert und gleichmäßig auf die Schicht aufgebracht werden.

Erfindungsgemäß ist es außerdem von Vorteil, dass die Schichtstruktur in einem kontinuierlichen Arbeitsprozess auf einer Anlage hergestellt werden kann. Somit kann das erfindungsgemäße Verfahren besonders effektiv im Vergleich zum Stand der Technik gestaltet werden.

Gemäß einem besonders bevorzugten Beispiel der Erfindung werden in einem ersten Schritt des erfindungsgemäßen Verfahrens Spinnfäden, Garne und/oder Zwirne einer Schneideinrichtung zugeführt, dort geschnitten und die geschnittenen Fasern auf eine Transportvorrichtung abgelegt, in einem zweiten Schritt die Fasern durch eine Kardiervorrichtung mechanisch volumisiert und ausgerichtet, in einem dritten Schritt die volumisierten Fasern durch einen Quertäfler getäfelt auf eine aus einer Faserwirrlage ausgebildeten Faserunterlage abgelegt, in einem vierten Schritt durch eine Füllstoffaufbringvorrichtung Füllstoffe auf die Schichtfolge gestreut, in einem fünften Schritt eine Faserdecklage auf die Schichtfolge aufgebracht, und die Schichten in einem sechsten Schritt an einer Wirkmaschine textilmechanisch verfestigt. Somit kann in einer kontinuierlichen Abfolge eine Mehrschichtstruktur hergestellt werden, die zum einen eine sehr hohe Stabilität und zum anderen eine sehr gute Elastizität aufweist. Dabei können die einzelnen Schritte ohne Weiteres nacheinander auf einer Anlage ausgeführt werden.

Die erfindungsgemäße Schichtstruktur ist durch eine Vorrichtung zum Herstellen einer Schichtstruktur zur Herstellung von Faserverbundmaterialien herstellbar, wobei die Vorrichtung eine Faservolumisiervorrichtung in Form einer Kardiervorrichtung und eine der Kardiervorrichtung nachgeordnete Wirkmaschine aufweist.

Mit der Vorrichtung ist mit sehr hoher Stabilität und Flexibilität eine Schichtstruktur herstellbar. Durch die Kardiervorrichtung können Fasern mechanisch volumisiert und ausgerichtet werden, wobei in der der Kardiervorrichtung nachgeordneten Wirkmaschine die volumisierten Fasern verfestigt werden können, um eine stabile Schichtstruktur auszubilden.

Entsprechend einer günstigen Weiterbildung der Vorrichtung ist der Kardiervorrichtung eine Füllstoffaufbringvorrichtung nachgeordnet und die Wirkmaschine ist der Füllstoffaufbringvorrichtung nachgeordnet. Mit der Füllstoffaufbringvorrichtung können zwischen die volumisierten Fasern Füllstoffe eingebracht werden, wobei in der der Füllstoffaufbringvorrichtung nachgeordneten Wirkmaschine die volumisierten Fasern mit den dazwischen eingebrachten Füllstoffen verfestigt werden können, so dass die Füllstoffe bleibend in der Schichtstruktur gehalten werden. Durch die eingebrachten Füllstoffe nimmt die durch die Vorrichtung hergestellte Schichtstruktur bei ihrer weiteren Verarbeitung weniger Harz auf, wodurch sich Kostenvorteile ergeben.

Vorzugsweise ist vor der Kardiervoffichtung eine Faserschneideinrichtung bzw. ein Chopper vorgesehen. Mit Hilfe der Faserschneideinrichtung können die Fasern auf eine bestimmte Länge eingestellt werden, um danach an der Kardiervorrichtung zu einem Vlies weiterverarbeitet werden zu können. Durch die Länge der abgeschnittenen Fasern können Festigkeit und Eiastizltätsmodul der herzustellenden Schichtstruktur beeinflusst werden.

Es ist besonders günstig, wenn zwischen der Kardiervorrlchtung und der Füllstoffaufbring-vorrichtung ein Quertäfler vorgesehen ist. Mit Hilfe des Quertäflers kann ein geeignetes, hohes Volumen der Schicht erzeugt werden, um eine besonders hohe Festigkeit der herzustellenden Schichtstruktur zu erzielen.

In einem vorteilhaften Beispiel der Erfindung weist die Vorrichtung eine zweite Faserschneideinrichtung und wenigstens eine Fördervorrichtung auf, wobei die durch die zweite Faserschneideinrichtung geschnittenen Fasern auf die Fördervorrichtung als Faserlage ablegbar sind und diese Faserlage durch die Fördervorrichtung so transportiert werden kann, dass die durch die Kardiervorrichtung volumisierten Fasern auf dieser Faserlage als Schicht abgelegt werden können. Somit kann eine Unterlage für die Schicht zur Verfügung gestellt werden, wobei die Herstellung für die Faserunterlage direkt mit der Herstellung der darauf abgelegten Schicht in einer Anlage gekoppelt werden kann.

Günstigerweise weist die Vorrichtung eine nach der Füllstoffaufbringvorrichtung über einer Fördervorrichtung für die Schichtstruktur vorgesehene dritte Faserschneideinrichtung auf, durch welche geschnittene Fasern als eine Faserdecklage auf die durch die Kardiervorrichtung volumisierten Fasern aufgebracht werden können. Somit kann direkt auf der Schicht eine Faserdecklage aufgebracht werden, durch welche die Schichtstruktur stabilisiert werden kann und eine definierte Oberfläche erhalten kann.

Vorteilhafte Ausführungsformen der vorliegenden Erfindung, deren Funktion und Vorteile werden im Folgenden anhand der Figuren der Zeichnung näher erläutert, wobei
- Figur 1: schematisch einen Grundaufbau einer aus einer Einzelschicht aufgebauten Schichtstruktur gemäß der vorliegenden Erfindung zeigt;
- Figur 2: schematisch einen Grundaufbau einer Mehrschichtstruktur gemäß der vorliegenden Erfindung zeigt; und
- Figur 3: schematisch eine Ausführungsform einer Vorrichtung zur Herstellung einer Schichtstruktur gemäß der vorliegenden Erfindung zeigt, an welcher ein möglicher Arbeitsablauf des Verfahrens zum Herstellen einer Mehrschichtstruktur gemäß de vorliegenden Erfindung erkennbar ist.

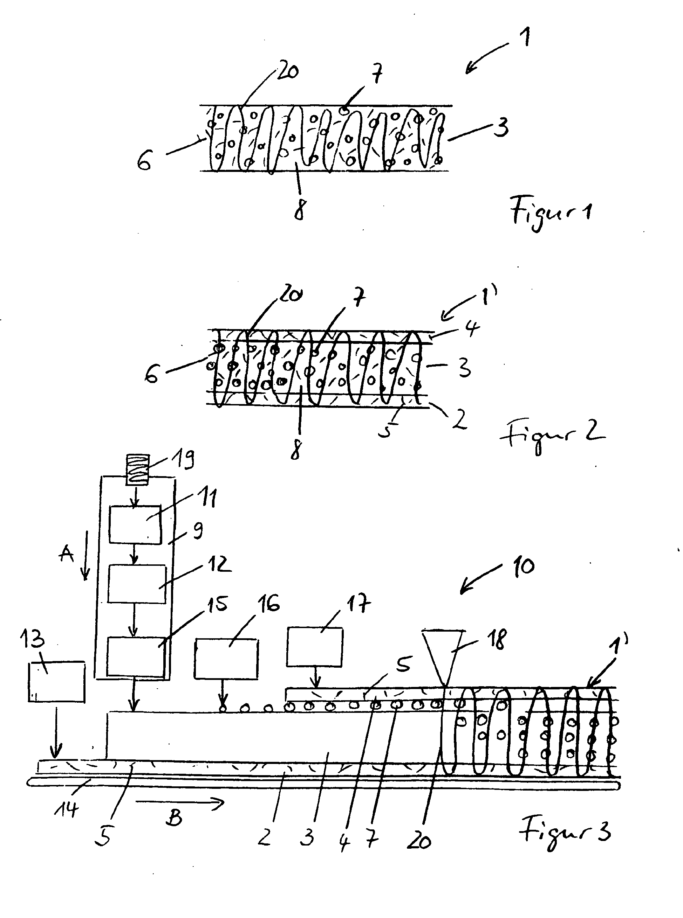

Figur 1 zeigt schematisch einen Grundaufbau einer aus einer Einzelschicht 3 aufgebauten Schichtstruktur 1 zur Herstellung von Faserverbundmaterialien. Die Schicht 3 der Schichtstruktur 1 weist volumiserte Fasern 6 auf, zwischen welchen Füllstoffen in Form von Füllkörpern 7 angeodnet sind. Die Schicht 3 ist durch wenigstens einen Faden 20 vernäht.

Die volumisierten Fasern 6 der Schicht 3 sind aus Spinnfäden, Garnen und/oder Zwirnen ausgebildet. Die volumisierten Fasern 6 der Schicht 3 bilden ein Vlies aus, wobei die Fasern 6 der Schicht 3 vorwiegend in einem Winkel von etwa 90° zur Transportrichtung der Schicht 3 bei der Herstellung der Schichtstruktur 1 ausgerichtet sind.

Die volumisierten Fasern 6 sind in dem in Figur 1 gezeigten Beispiel Glasfasern.

Die Fasern 6 der Schichtstruktur 1 sind geschnittene Fasern mit einer Schnittlange von 75 mm, können jedoch In anderen Ausführungsformen der Erfindung auch Schnittlangen zwischen etwa 5 mm und etwa 200 mm aufweisen.

In dem in Figur 1 gezeigten Beispiel besteht die Schicht 3 ausschließlich aus volumisierten Fasern 6 In anderen Beispielen der Erfindung kann die Schicht 3 jedoch auch aus volumisierten und nichtvolumisierten Fasern aufgebaut sein.

Die in die Schicht 3 eingelagerten Füllkörper 7 sind in dem gezeigten Beispiel Mikrohohlkörper aus Kunststoff, können jedoch in anderen Ausführungsformen der Erfindung auch andere Füllkörper, wie Polypropylen-, Polyester und/oder Glaskugeln oder auch Naturfasern umfassen.

Die Füllkörper 7 der Schichtstruktur 1 sind in dem in Figur 1 gezeigten Beispiel durch Warme aufgeblähte Mikrohohlkörper. Es ist jedoch auch möglich, dass derartige Mikrohohlkörper erst nach ihrem Einbringen in die Schicht 3 aufgebläht werden. Dies kann beispielsweise durch Wärme erfolgen.

Die Füllkörper 7 der Schichtstruktur 1 besitzen einen Durchmesser von etwa 10 µm bis etwa 300 µm. Die zwischen den Fasern 6 und den Füllkörpern 7 befindlichen Zwischenraume 8 der Schicht 3 sind später mit Harz oder einem anderen härtbaren Material, wie beispielswelse Kunststoff, auffüllbar.

Figur 2 zeigt schematisch einen Grundaufbau einer erfindungsgemäßen Schichtstruktur in Form einer mehrschichtigen Matte bzw. Mehrschichtstruktur 1' zur Herstellung von Faserverbundmaterlallen. Beispielsweise sind mit der Mehrschichtstruktur 1' Plattenlaminate und andere Formteile herstellbar.

Die Mehrschichtstruktur 1' weist eine erste Lage bzw. Faserunterlage 2 auf. Auf der Faserunterlage 2 ist eine zweite Lage bzw. Mittelschicht 3 angeordnet, auf welcher wiederum eine dritte Lage bzw. Faserdecklage 4 vorgesehen ist. Somit ist die Mittelschicht 3, die im Wesentlichen der Schicht 3 aus Figur 1 entspricht, zwischen den Faserlagen 3 und 4 angeordnet.

In dem in Figur 2 gezeigten Beispiel sind die Faserunterlage 2 und die Faserdecklage 4 aus geschnittenen Glasfasern 5 ausgebildet. Die Faserunterlage 2 und die Faserdecklage 4 kann jedoch in anderen, nicht gezeigten Ausführungsformen der vorliegenden Erfindung allgemein aus Spinnfäden, Garnen und/oder Zwirnen ausgebildet sein. Dabei sind die Faserlagen 2, 4 beispielsweise aus geschnittenen Spinnfäden mit einem Flächengewicht von etwa 250 g/m² bis etwa 300 g/m² ausgebildet.

Die geschnittenen Glasfasern 5 der Faserlagen 2, 4 weisen eine Schnittlänge von etwa 5 mm bis etwa 200 mm auf.

Die Faserlage, aus der die Mittelschicht 3 ausgebildet ist, ist ein Vlies aus volumisierten Spinnfäden, Garnen und/oder Zwirnen. Wie in Figur 1, ist die Faserlage 3 aus Figur 2 aus geschnittenen Glasfasern 6 mit einer Schnittlänge von etwa 75 mm ausgebildet. Die Faserlage der Mittelschicht 3 ist in dem gezeigten Beispiel aus Glasfasern ausgebildet. Zudem ist die Faserlage, aus der die Mittelschicht 3 ausgebildet ist, durch Mikrohohlkörper 7, die zwischen den Fasern 6 der Mittelschicht 3 eingebettet sind, volumisiert. Durch die erfindungsgemäße Volumisierung werden beispielsweise die Glasfasern, aus welchen die Faserlage der Mittelschicht 3 ausgebildet ist, um ein Mehrfaches ihres ursprünglichen Volumens expandiert.

Es ist jedoch auch möglich, dass die Mehrschichtstruktur 1' aus Figur 2 eine Mittelschicht 3 mit noch nicht aüfgeblähten bzw. aufblähbaren Mikrohohlkugeln 7 aus Kunststoff aufweist.

Es wurde überraschend festgestellt, dass selbst zweidimensional angeordnete, mit elastischen Mikrohohlkörpem oder -kugeln 7 expandierte Faserstränge 6 eine hohe Elastizität und Rückstellspannung haben und auf Druck einen hohen hydraulischen Gegendruck erzeugen, der durch die Deformierung der Mikrohohlkörper 7 erreicht wird. Dieser Gegendruck reicht aus, um in einem sich anschließenden Formprozess der Mehrschichtstruktur 1' die außenliegenden, der Verstärkung dienenden Fasern 5 der Faserunterlage 2 und der Faserdecklage 4 an die Formhälften einer Form anzupressen. Im Unterschied hierzu kommt es bei den im Stand der Technik bekannten Kernlagen nur dann zu mechanischen Rückfederungseffekten, wenn ein Teil der vemadelten oder schlingenförmig gestrickten oder gewirkten Fasern bzw. Spinnfäden, Garne oder Zwirne vertikal in Richtung der Druckausübung angeordnet wird, so dass eine Dreidimensionalität zur Verfügung gestellt wird. Bei den volumisierten Spinnfäden, Garnen oder Zwirnen der Mittelschicht 3 der vorliegenden Erfindung reicht dagegen die zweidimensionale Anordnung aus, um vorteilhaft eine hohe Rückstellspannung bereitstellen zu können.

Während bei der dreidimensionalen Anordnung der Spinnfäden, Garne oder Zwirne der Kern- oder Mittelschichten der im Stand der Technik befindlichen mehrschichtigen Matten in vertikaler Richtung Druckspannungen erzeugt werden, die zu einer unansehnlichen Oberfläche des fertigen Formteils in Folge des Printeffektes führen, werden durch die zweidimensionale Anordnung der volumisierten Spinnfäden, Garne oder Zwirne der Mittelschicht 3 von Figur 2 Beeinträchtigungen der Oberfläche des hergestellten Formteils vermieden.

Zwischen den Fasern 6 und den Mikrohohlkörpern 7, die in der Mittelschicht 3 eingebettet sind, befinden sich Zwischenräume 8, die mit Harz bzw. anderen härtbaren Kunststoffen aufgefüllt werden können. Das Harz oder der härtbare Kunststoff kann durch Injektion, das heißt durch Druck, oder durch Infusion, das heißt durch Vakuum, in die Zwischenräume 8 der Mittelschicht 3 eingebracht werden, wobei während des Injektions- bzw. Infusionsprozesses die Mehrschichtstruktur 1' zwischen zwei Formhälften einer Form vorgesehen wird. Als härtbare Harze bzw. Kunststoffe kommen beispielsweise ungesättigte Polyesterharze, Phenolharze oder Epoxidharze in Betracht.

Die so hergestellte Mehrschichtstruktur 1' weist eine hohe Dehnbarkeit sowie eine hohe dreidimensionale Verformbarkeit auf. Dies wird insbesondere durch die Kernlage oder Mittelschicht 3 realisiert, die sich elastisch verhält und eine Rückstellspannung zur Verfügung stellen kann. Bedingt durch die in der Mittelschicht 3 vorhandenen elastischen Mikrohohlkörper 7 ist die Mittelschicht 3 selbst federnd und kann deshalb die außenliegenden Faserlagen 2, 4 bei einem Verpressen der Mehrschichtstruktur 1' in einer Form diese zuverlässig an die Form andrücken. Dadurch wird erreicht, dass es zwischen der Form und den Faserlagen 2, 4 nicht zu Überspülungen von nichtverstärktem Harz kommt, was die Funktionsfähigkeit des hergestellten Formteils beeinträchtigen würde. Durch die Dehnbarkeit der erfindungsgemäßen mehrschichtigen Matte bzw. Mehrschichtstruktur 1' wird zudem erreicht, dass es selbst bei komplizierter Formgebung nicht zu Materialrissen kommt.

Die in der Mittelschicht 3 der Mehrschichtstruktur 1' eingebetteten Mikrohohlkörper 7 reduzieren den Harzverbrauch beim Tränken der Mehrschichtstruktur 1' mit Harz deutlich im Vergleich zu den im Stand der Technik bekannten mehrschichtigen Matten. Dies bedeutet eine beträchtliche Reduzierung des spezifischen Gewichtes im Gegensatz zu den im Stand der Technik bekannten Komplexmatten. Infolgedessen ist die erfindungsgemäße Mehrschichtstruktur 1' sehr leicht und hat trotz der stabilen Charakteristik eines Voll-Laminats die gewichtsreduzierenden Eigenschaften eines Sandwichlaminats. Im Gegensatz zu dem im Stand der Technik befindlichen Sandwichlaminat ist jedoch bei der Mehrschichtstruktur 1' der vorliegenden Erfindung kein zusätzlicher Kernwerkstoff aus Leichtholz oder Schaumstoff oder dergleichen notwendig, der separat eingearbeitet werden müsste, wenn aus konstruktiven Gründen eine leichte, biegesteife Konstruktion gewünscht wird.

Figur 3 zeigt schematisch eine Vorrichtung 10 zur Herstellung der erfindungsgemäßen Schichtstruktur 1' aus Figur 2, wobei anhand der schematischen Darstellung aus Figur 3 ein möglicher Ablauf eines erfindungsgemäßen Verfahrens zur Herstellung einer Mehrschichtstruktur 1' erkennbar ist.

Wie in Figur 3 gezeigt, werden in einem ersten Verfahrensschritt Spinnfäden, Garne und/oder Zwirne von einem Direktroving 19 einer ersten Faserschneideinrichtung in Form eines Breitschneidwerks bzw. eines Choppers 11 zugeführt. In der Faserschneideinrichtung 11 werden die Spinnfäden, Garne und/oder Zwirne auf eine definierte Länge geschnitten. Vorzugsweise können hierbei geschnittene Glasfasern 6 mit einer Länge von 75 mm oder einer anderen geeigneten Länge erzeugt werden und auf ein unter der Faserschneideinrichtung 11 befindliches Förderband 9 zunächst wirr abgelegt werden. Die glasfasern 6 besitzen eine Faserstärke ≥ 10 µm. Durch das Förderband 9 werden die geschnittenen Fasern 6 einer Kardiervorrichtung bzw. einem Krempel 12 zugeführt. Die Kardiervorrichtung 12 ist in dem gezeigten Beispiel ein Walzenkrempel.

Die Kardiervorrichtung 12, die in der vorliegenden Erfindung verwendet wird, ist allgemein eine Vorrichtung zur Vliesbildung bzw. zur Ausbildung eines Faserflors. Im Ergebnis des Kardiervorgangs wird durch die Kardiervorrichtung 12 eine zumindest teilweise volumisierte Schicht zur Verfügung gestellt, welche Fasern mit einer zumindest teilweisen Gerichtetheit aufweist. Als Kardiervorrichtung 12 kann sowohl ein auf einem mechanischen Prinzip basierender Krempel als auch ein auf einem aerodynamischen Faserablegeprinzip basierendes Aggregat zur aerodynamischen Vliesbildung eingesetzt werden. In anderen Beispielen der Erfindung kann auch das mechanische mit dem aerodynamischen Ablegeprinzip gekoppelt angewendet werden.

Die Fasern 6 können auch direkt in die Kardiervorrichtung 12 hinein geschnitten werden. Dies bedarf einer hohen Genauigkeit in der Faservorlage.

In der Standard-Kardiervorrichtung 12 werden die Fasern 6 in einem zweiten Schritt mechanisch volumisiert bzw. aufgelöst und vorwiegend in einer Orientierung von etwa 0° zur Transportrichtung A des Förderbandes 9 ausgerichtet. Dabei entsteht eine Vlieslage 3, welche durch eine der Kardiervorrichtung 12 nachgeordnete Legeeinrichtung abgelegt wird, wobei durch einen Quertäfler 15 eine getäfelte Ablage der Schicht 3 auf einer durch ein zweites Förderband 14 in einem Winkel von 90° zu einer dem Quertäfler 15 zugeführten Faserunterlage 2 erfolgt. Nach dem Ablegen weisen die Fasern 6 der Schicht 3 vorwiegend eine Orientierung von etwa 90° zur Transportrichtung B des Förderbandes 14 auf, in welcher Orientierung die Fasern 6 bis zu ihrer Verfestigung verbleiben. Hiermit kann eine besonders hohe Stabilität der Schichtstruktur 1' in 90°-Richtung erreicht werden. Die getäfelte Schicht 13 kann beispielsweise eine Dicke von etwa 10 cm bis etwa 20 cm, vorzugsweise von etwa 15 cm aufweisen.

In einer anderen Ausführungsvariante der Erfindung kann das Vlies 3 auch in 0° zur Transportrichtung B auf der Faserlage 2 abgelegt werden, um eine hohe Festigkeit der Schichtstruktur 1' in 0°-Richtung zu erzielen.

Die Faserunterlage 2 wurde vorher durch das Schneiden von Spinnfäden, Garnen und/oder Zwirnen mittels einer zweiten Schneideinrichtung bzw. eines Choppers 13 und Ablage der geschnittenen Fasern 5 auf dem Förderband 14 erzeugt. Im Gegensatz zu den Fasern 6 des Vlieses 3 sind die Fasern 5 der Faserunterlage 2 im Wesentlichen wirr oder schräg zur Transportrichtung B des Förderbandes 14 abgelegt. Damit bilden die Fasern 5 der Faserunterlage 2 eine geeignete Stabilisierungsschicht als Unterlage für das Vlies 3.

In einem vierten Schritt werden durch eine Füllstoffaufbringvorrichtung 16 Füllkörper 7 auf das Vlies 3 dosiert und gleichmäßig aufgestreut. Beim Aufbringen der Füllkörper 7 wird die Oberfläche des Vlieses 3 nicht beschädigt.

In einem fünften Schritt wird eine Faserdecklage 4 auf das Vlies 3 mit den Füllkörpern 7 aufgebracht. Hierfür werden Spinnfäden, Garne und/oder Zwirne durch eine dritte Faserschneideinrichtung bzw. einen Chopper 17, der sich vorzugsweise oberhalb der Transportvorrichtung 14 für die Schichtstruktur 1' befindet, geschnitten und abgelegt. Die Faserdecklage 4 ist in dem in Figur 3 gezeigten Beispiel, wie die Faserunterlage 2, eine Faserwirrlage, kann jedoch auch gerichtete Fasern 5 aufweisen.

Grundsätzlich können bei der vorliegenden Erfindung die Fasern 5 der Faserdecklage 4 als auch die Fasern 5 der Faserunterlage 2 sowohl wirr als auch gerichtet abgelegt werden.

Die Schichten 2, 3 und 4 mit den dazwischen vorgesehenen Füllkörpern 7 werden in einem sechsten Schritt mit Hilfe einer Wirkmaschine 18 textilmechanisch verfestigt, indem sie beispielsweise mittels wenigstens eines Fadens 20 vernäht werden.

Die Füllkörper 7 dringen in das Vlies 3 zum Teil schon kurz nach ihrem Aufbringen durch die Füllkörperaufbringvorrichtung 16 durch ihre Schwerkraft in das Vlies 3 ein, werden jedoch endgültig durch das Verfestigen an der Wirkmaschine 18 in dem Vlies 3 eingelagert.

Die Vlieslage 3 besitzt durch die eingebetteten Füllkörper 7 ein hohes Volumen. In dem in Figur 3 gezeigten Beispiel sind die Mikrohohlkörper 7, die in die Vlieslage 3 eingebettet sind, bereits vor ihrem Aufstreuen auf die Vlieslage 3 unter Temperatureinfluss aufgebläht worden. Es ist jedoch auch möglich, eine ungeblähte Vorstufe der Mikrohohlkörper 7 bzw. des darin enthaltenen Hohlkörperfüllstoffs in die Zwischenräume 8 zwischen den Fasern 6 der zweiten Lage bzw. Mittelschicht einzubringen und das so erhaltene Material für die erforderliche Dauer einer für den Blähprozess der Vorstufe erforderlichen Temperatur auszusetzen.

Durch das Einbringen der Füllstoffe 7 kann zum einen die Aufnahmefähigkeit für flüssige härtbare Harze auf einen gewünschten Wert eingestellt werden und zum anderen eine Verbesserung der mechanischen Eigenschaften der mehrschichtigen Matte bzw. Mehrschichtstruktur 1' wie eine gute Elastizität und eine gute Rückstellspannung zur Verfügung gestellt werden.

Wie es Figur 3 zeigt, können mit Hilfe der erfindungsgemäßen Vorrichtung 10 bzw. des erfindungsgemäßen Verfahrens in einem kontinuierlichen Arbeitsgang die einzelnen Materiallagen 2, 3, 4 mit den Füllstoffen 7 auf den Laufbändem bzw. Transportvorrichtungen 9, 14 schichtförmig abgelegt und damit auf einfache und kostengünstige Weise zu einem Endprodukt verarbeitet werden.

Mit Hilfe der Wirkmaschine 18 kann die Mehrschichtstruktur 1' auf eine vordefinierte Mattenstärke gebracht werden. So wird typischerweise beim textilmechanischen Verfestigen, wie beim Vernadeln, Vernähen, Stricken und/oder Wirken, anders als in Figur 3 gezeigt, die Mattenstärke der Schichtstruktur 1' deutlich reduziert, da beim textilmechanischen Verfestigen das volumisierte Vlies 3 zusammengedrückt wird. Nach dem textilmechanischen Verfestigen kann die Schichtstruktur 1' beispielsweise nur noch eine Dicke von etwa 5 mm bis etwa 10 mm, vorzugsweise von etwa 7 mm aufweisen. Ungeachtet des Aufbaus, des Gewichts und der Dicke der der Wirkmaschine 18 vorgelegten Schichtstruktur kann die Enddicke der Schichtstruktur 1 bzw. der Mehrschichtstruktur 1' durch kontrolliertes Verfestigen gezielt gesteuert werden.

Beim Verfestigen bzw. Vernähen an der Wirkmaschine 18 werden die außenliegenden Faserlagen 2, 4, die aus Fasern 5, wie zum Beispiel Glasfasern, bestehen, mit der Mittelschicht 3 zu der mehrschichtigen Matte bzw. Mehrschichtstruktur 1' verbunden.

Die Mehrschichtstruktur 1' kann in einem weiteren Schritt durch eine entsprechende Vorrichtung mit Harz getränkt werden. Zur Harzapplikation können sämtliche im Stand der Technik bekannten Verfahren, wie RTM, RIM, Vakuuminjektion, Handlaminieren usw. eingesetzt werden.

Ein Tränken der Mehrschichtstruktur 1' kann beispielsweise mit Hilfe des sogenannten Injektionsverfahrens für ungesättigte Polyesterharze erfolgen. Die Vorteile dieses Injektionsverfahrens liegen in der niedrigen Arbeitsplatzbelastung und in der beidseitig glatten, mit Gelcoat versehenen Oberfläche der erzeugten Mehrschichtstruktur 1'.

Die Injektionsverfahren weisen grundsätzlich folgenden Ablauf auf: Unter Einfluss eines speziellen Druckbehälters wird in einer geschlossenen Form Harz in die applizierte Glasfaserverstärkung, das heißt bei der Mehrschichtstruktur 1' in eine Oberfläche einer der Faserdecklagen 2, 4, injiziert. Dabei ist die jeweilige Konfiguration, wie zum Beispiel der Harzfluss, die Fließrichtung, die Fließfront und der Formenbau in hohem Maße formteilorientiert. Die mit Harz getränkte Mehrschichtstruktur 1' lässt sich daraufhin leicht in Radien und gewölbten Formen drapieren und weist eine gute Kompressibilität auf.

Die Herstellung von komplexen Formteilen in mittleren bis hohen Stückzahlen wird daraufhin im Nasspressverfahren realisiert. Unter dem Druck eines sich schließenden Formenwerkzeugoberteils, das in den Figuren nicht gezeigt ist, verteilt sich daraufhin das Harz in der Form.

Da die erfindungsgemäße Schichtstruktur sehr gute Verstärkungseigenschaften aufweist, kann sie beispielsweise zur Herstellung glasfaserverstärkter Kunststoffe verwendet werden, welche wiederum im Bootsbau, im Fahrzeugbau oder auch in Windkraftanlagen Verwendung finden können. Mittels der erfindungsgemäßen Schichtstruktur lassen sich auch vorteilhafte thermische Effekte der daraus hergestellten Faserverbundwerkstoffe erzielen.

## Patentansprüche

1. Schichtstruktur (1) zur Herstellung von Faserverbundmaterialien, **dadurch gekennzeichnet, dass** die Schichtstruktur (1) eine Schicht (3) aufweist, die durch Kardieren volumisierte Glasfasern (6) aufweist, wobei die Schicht (3) textilmechanisch verfestigt ist.

2. Schichtstruktur nach Anspruch 1, **dadurch gekennzeichnet, dass** zwischen den volumisierten Glasfasern (6) Füllstoffe (7) eingelagert sind.

3. Schichtstruktur nach Anspruch 1 oder 2, **dadurch gekennzeichnet, dass** die Schicht (3) volumisierte Spinnfäden, Garne und/oder Zwirne aufweist.

4. Schichtstruktur nach einem der vorhergehenden Ansprüche, **dadurch gekennzeichnet, dass** die volumisierten Glasfasern (6) aus vor dem Volumisieren geschnittenen Fasern mit einer Schnittlänge von etwa 5 mm bis etwa 200 mm ausgebildet sind.

5. Schichtstruktur nach Anspruch 4, **dadurch gekennzeichnet, dass** die Glasfasern (6) eine Faserstärke von ≥ 10 µm aufweisen.

6. Schichtstruktur nach einem der vorhergehenden Ansprüche, **dadurch gekennzeichnet, dass** die Schicht (3) volumisierte und nichtvolumisierte Fasern aufweist.

7. Schichtstruktur nach einem der vorhergehenden Ansprüche, **dadurch gekennzeichnet, dass** die Schicht (3) aus einem kardierten Vlies ausgebildet ist, in welchem Füllstoffe (7) eingelagert sind, wobei das mit den Füllstoffen (7) versetzte Vlies textilmechanisch verfestigt ist.

8. Schichtstruktur nach einem der vorhergehenden Ansprüche, **dadurch gekennzeichnet, dass** die Fasern der Schicht (3) vorwiegend in einem Winkel von etwa 90° zu einer Transportrichtung (B) der Schicht (3) beim textilmechanischen Verfestigen der Schichtstruktur (1) ausgerichtet sind.

9. Schichtstruktur nach Anspruch 2 oder 7, **dadurch gekennzeichnet, dass** die Füllstoffe (7) Mikrohohlkörper, Polypropylen-, Polyester- und/oder Glaskugeln oder Naturfasern umfassen.

10. Schichtstruktur nach Anspruch 2, 7 oder 9, **dadurch gekennzeichnet, dass** die Füllstoffe (7) aufgebläht oder aufblähbar sind.

11. Schichtstruktur nach Anspruch 2, 7, 9 oder 10, **dadurch gekennzeichnet, dass** die Füllstoffe (7) einen Durchmesser von etwa 10 µm bis etwa 300 µm aufweisen.

12. Schichtstruktur nach einem der vorhergehenden Ansprüche, **dadurch gekennzeichnet, dass** in der Schicht (3) Zwischenräume (8) mit Harz oder einem härtbaren Material aufgefüllt sind.

13. Schichtstruktur nach einem der vorhergehenden Ansprüche, **dadurch gekennzeichnet, dass** die Schicht (3) auf einer Faserunterlage (2) angeordnet ist.

14. Schichtstruktur nach einem der vorhergehenden Ansprüche, dadurch gekennzeilchnet, dass auf der Schicht (3) eine Faserdecklage (4) angeordnet ist.

15. Schichtstruktur nach wenigstens einem der Ansprüche 13 oder 14, **dadurch gekennzeichnet, dass** die Faserunterlage (2) und/oder die Faserdecklage (4) aus Spinnfäden, Garnen und/oder Zwirnen ausgebildet sind.

16. Schichtstruktur nach den Ansprüchen 13 und 14, **dadurch gekennzeichnet, dass** die Schicht (3) als eine Mittelschicht zwischen der Faserunterlage (2) und der Faserdecklage (4) angeordnet ist und die Faserunterlage (2), die Schicht (3) und die Faserdecklage (4) aus Glasfasern ausgebindet sind.

17. Schichtstruktur nach Anspruch 16, **dadurch gekennzeichnet, dass** die Faserunterlage (2) und die Faserdecklage (4) aus geschnittenen Spinnfäden mit einem Flächengewicht von etwa 250 g/m² bis etwa 300 g/m² ausgebildet sind.

18. Verfahren zum Herstellen einer Schichtstruktur (1) für die Herstellung von Faser verbundmaterialien, **dadurch gekennzeichnet, dass** Glasfasern (6) durch Kardieren volumisiert und als eine Schicht (3) abgelegt werden und die Schicht (3) textilmechanisch verfestigt wird.

19. Verfahren nach Anspruch 18, **dadurch gekennzeichnet, dass** zwischen die volumisierten Glasfasern (6) der Schicht (3) Füllstoffe (7) eingebracht werden und die mit den Füllstoffen (7) versetzte Schicht (3) textilmechanisch verfestigt wird.

20. Verfahren nach Anspruch 18 oder 19, **dadurch gekennzeichnet, dass** die Glasfasern (6) vor ihrem Volumisieren durch eine Schneideeinrichtung (11) geschnitten werden.

21. Verfahren nach Anspruch 20, **dadurch gekennzeichnet, dass** die Glasfasern (6) vor ihrem Volumisieren durch die Schneideeinrichtung (11) auf eine definierte Länge geschnitten werden.

22. Verfahren nach Anspruch 20 oder 21, **dadurch gekennzeichnet, dass** die geschnittenen Glasfasern (6) vor ihrem Volumisieren einer Kardiervorrichtung (12) gleichmäßig über die gesamte Arbeitsbreite der Kardiervorrichtung (12) vorgelegt werden.

23. Verfahren nach einem der Ansprüche 18 bis 22, **dadurch gekennzeichnet, dass** die Glasfaser (6) vor dem textilmechanischen Verfestigen vorwiegend in eine Ausrichtung von etwa 0° oder etwa 90° zu einer Transportrichtung (B) der Schicht (3) beim textilmechanischen Verfestigen der Schichtstruktur (1) gebracht werden.

24. Verfahren nach einem der Ansprüche 18 bis 23, **dadurch gekennzeichnet, dass** die Schicht (3) getäfelt abgelegt wird.

25. Verfahren nach einem der Ansprüche 18 bis 24, **dadurch gekennzeichnet, dass** die Schicht (3) auf eine Faserunterlage (2) abgelegt wird.

26. Verfahren nach Anspruch 19, **dadurch gekennzeichnet, dass** die Füllstoffe (7) durch eine Füllstofaufbringvorrichtung (16) auf die abgelegte Schicht (3) gestreut werden.

27. Verfahren nach einem der Ansprüche 18 bis 26, **dadurch gekennzeichnet, dass** auf die Schicht (3) vor dem textilmechanischen Verfestigen eine Faserdecklage (4) aufgebracht wird.

28. Verfahren nach einem der Ansprüche 18 bis 27, **dadurch gekennzeichnet, dass** die Schichtstruktur (1) in einem kontinuierlichen Arbeitsprozess auf einer Anlage (10) hergestellt wird.

29. Verfahren nach einem der Ansprüche 18 bis 28, **dadurch gekennzeichnet, dass** in einem ersten Schritt Spinnfäden, Garne und/oder Zwirne aus Glasfasern (6) in einer Schneideinrichtung (11) zugeführt, dort geschnitten und die geschnittenen Glasfasern (6) auf eine Transportvorrichtung (9) abgelegt werden,
in einem zweiten Schritt die Glasfasern (6) durch eine Kardiervorrichtung (129 mechanisch volumisiert und ausgerichtet werden,
in einem dritten Schritt die volumisierten Glasfasern (6) durch einen Quertäfler (15) getäfelt auf eine aus einer Faserwirrlage ausgebildeten Faserunterlage (2) abgelegt werden,
in einem vierten Schritt durch eine Füllstoffaufbringvorrichtung (16) Füllstoffe (7) auf die Schichtfolge (2, 3) gestreut werden,
in einem fünften Schritt eine Faserdecklage (4) auf die Schichtfolge (2, 3) aufgebracht wird, und
die Schichten (2, 3, 4) in einem sechsten Schritt an einer Wirkmaschine (18) verfestigt werden.

## Claims

1. Layered structure (1) for production of fibre composite materials, **characterized in that** the layered structure (1) comprises a layer (3) comprising glass fibres (6) volumized by carding, wherein the layer (3) is textile-mechanically consolidated.

2. Layered structure according to claim 1, **characterized in that** fillers (7) are embedded between the volumized glass fibres (6).

3. Layered structure according to claim 1 or 2, **characterized in that** the layer (3) comprises volumized filaments, yarns and/or threads.

4. Layered structure according to any preceding claim, **characterized in that** the volumized glass fibres (6) are formed from fibres cut to a length of about 5 mm to about 200 mm before volumizing.

5. Layered structure according to claim 4, **characterized in that** the glass fibres (6) have an individual fibre thickness of ≥ 10 µm.

6. Layered structure according to any preceding claim, **characterized in that** the layer (3) comprises volumized and non-volumized fibres.

7. Layered structure according to any preceding claim, **characterized in that** the layer (3) is formed from a carded web embedding fillers (7), wherein the web admixed with the fillers (7) is textile-mechanically consolidated.

8. Layered structure according to any preceding claim, **characterized in that** the fibres of layer (3) are predominantly aligned at an angle of about 90° to a transport direction (B) of layer (3) in the textile-mechanical consolidation of layered structure (1).

9. Layered structure according to claim 2 or 7, **characterized in that** the fillers (7) comprise hollow microbodies, spheres of polypropylene, of polyester and/or of glass or natural fibres.

10. Layered structure according to claim 2, 7 or 9, **characterized in that** the fillers (7) are expanded or expandable.

11. Layered structure according to claim 2, 7, 9 or 10, **characterized in that** the fillers (7) have a diameter of about 10 µm to about 300 µm.

12. Layered structure according to any preceding claim, **characterized in that** interstices (8) in layer (3) are filled with resin or a curable material.

13. Layered structure according to any preceding claim, **characterized in that** the layer (3) is arranged on a fibrous underlay (2).

14. Layered structure according to any preceding claim, **characterized in that** a fibrous overlay (4) is arranged on layer (3).

15. Layered structure according to either or both of claims 13 and 14, **characterized in that** the fibrous underlay (2) and/or the fibrous overlay (4) are formed from filaments, yarns and/or threads.

16. Layered structure according to claims 13 and 14, **characterized in that** the layer (3) is arranged as a midlayer between the fibrous underlay (2) and the fibrous overlay (4) and the fibrous underlay (2), the layer (3) and the fibrous overlay (4) are formed from glass fibres.

17. Layered structure according to claim 16, **characterized in that** fibrous underlay (2) and the fibrous overlay (4) are formed from cut filaments having a basis weight of about 250 g/m² to about 300 g/m².

18. Process for producing a layered structure (1) for the production of fibre composite materials, **characterized in that** glass fibres (6) are volumized by carding and laid down as a layer (3) and the layer (3) is textile-mechanically consolidated.

19. Process according to claim 18, **characterized in that** fillers (7) are introduced between the volumized glass fibres (6) of layer (3) and the layer (3) mixed with the fillers (7) is textile-mechanically consolidated.

20. Process according to claim 18 or 19, **characterized in that** the glass fibres (6) are cut by a cutting means (11) before being volumized.

21. Process according to claim 20, **characterized in that** the glass fibres (6) are cut by the cutting means (11) to a defined length before being volumized.

22. Process according to claim 20 or 21, **characterized in that** the cut glass fibres (6) are presented to a carding device (12) uniformly across the entire working width of carding device (12) before being volumized.

23. Process according to any of claims 18 to 22, **characterized in that** the glass fibres (6) are predominantly brought into an alignment of about 0° or about 90° relative to a transport direction (B) of layer (3) in the textile-mechanical consolidation of layered structure (1) before the textile-mechanical consolidation.

24. Process according to any of claims 18 to 23, **characterized in that** the layer (3) is laid down in plaited form.

25. Process according to any of claims 18 to 24, **characterized in that** the layer (3) is laid down on a fibrous underlay (2).

26. Process according to claim 19, **characterized in that** the fillers (7) are scattered by a filler applicator (16) onto the laid-down layer (3).

27. Process according to any of claims 18 to 26, **characterized in that** a fibrous overlay (4) is applied to layer (3) before textile-mechanical consolidation.

28. Process according to any of claims 18 to 27, **characterized in that** the layered structure (1) is produced in a continuous operation on one apparatus (10).

29. Process according to any of claims 18 to 28, **characterized in that**,
in a first step, filaments, yarns and/or threads composed of glass fibres (6) are fed to a cutting means (11) and cut therein and the cut glass fibres (6) are laid down on a transport device (9),
in a second step, the glass fibres (6) are mechanically volumized and aligned by a carding device (12),
in a third step, the volumized glass fibres (6) are laid by a cross-lapper (15) in plaited form down onto a fibrous underlay (2) formed from randomly laid fibres,
in a fourth step, fillers (7) are scattered by a filler applicator (16) onto the layer sequence (2, 3),
in a fifth step, a fibrous overlay (4) is applied atop the layer sequence (2, 3), and
in a sixth step, the layers (2, 3, 4) are consolidated on a knitting machine (18).

## Revendications

1. Structure stratifiée (1) destinée à la fabrication de matériaux renforcés par des fibres, **caractérisé en ce que** la structure stratifiée (1) présente une couche (3), qui comprend des fibres de verre (6) volumisées par cardage, dans laquelle la couche (3) est consolidée à la machine textile.

2. Structure stratifiée selon la revendication 1, **caractérisé en ce que** des matières de remplissage (7) sont incorporées entre les fibres de verre volumisées (6).

3. Structure stratifiée selon la revendication 1 ou 2, **caractérisé en ce que** la couche (3) présente des brins, des fils et/ou des retors volumisés.

4. Structure stratifiée selon l'une quelconque des revendications précédentes, **caractérisé en ce que** les fibres de verre volumisées (6) sont réalisées à partir de fibres coupées avant la volumisation à une longueur de coupe d'environ 5 mm à environ 200 mm.

5. Structure stratifiée selon la revendication 4, **caractérisé en ce que** les fibres de verre (6) présentent une épaisseur de fibre de ≥ 10 µm.

6. Structure stratifiée selon l'une quelconque des revendications précédentes, **caractérisé en ce que** la couche (3) présente des fibres volumisées et des fibres non volumisées.

7. Structure stratifiée selon l'une quelconque des revendications précédentes, **caractérisé en ce que** la couche (3) est réalisée à partir d'un non-tissé cardé, dans lequel des matières de remplissage (7) sont incorporées, dans laquelle le non-tissé complété avec les matières de remplissage (7) est consolidé à la machine textile.

8. Structure stratifiée selon l'une quelconque des revendications précédentes, **caractérisé en ce que** les fibres de la couche (3) sont orientées principalement sous un angle d'environ 90° par rapport à une direction de transport (B) de la couche (3) lors de la consolidation à la machine textile de la structure stratifiée (1).

9. Structure stratifiée selon la revendication 2 ou 7, **caractérisé en ce que** les matières de remplissage (7) comprennent des micro-corps creux, des billes de polypropylène, de polyester et/ou de verre ou des fibres naturelles.

10. Structure stratifiée selon la revendication 2, 7 ou 9, **caractérisé en ce que** les matières de remplissage (7) sont ou peuvent être gonflées.

11. Structure stratifiée selon la revendication 2, 7, 9 ou 10, **caractérisé en ce que** les matières de remplissage (7) présentent un diamètre d'environ 10 µm à environ 300 µm.

12. Structure stratifiée selon l'une quelconque des revendications précédentes, **caractérisé en ce que** des espaces intermédiaires (8) dans la couche (3) sont remplis de résine ou d'un matériau durcissable.

13. Structure stratifiée selon l'une quelconque des revendications précédentes, **caractérisé en ce que** la couche (3) est disposée sur une couche de fibres sous-jacente (2).

14. Structure stratifiée selon l'une quelconque des revendications précédentes, **caractérisé en ce qu'**une couche de recouvrement en fibres (4) est disposée sur la couche (3).

15. Structure stratifiée selon au moins une des revendications 13 ou 14, **caractérisé en ce que** la couche de fibres sous-jacente (2) et/ou la couche de recouvrement en fibres (4) est/sont formée(s) à partir de brins, de fils et/ou de retors.

16. Structure stratifiée selon les revendications 13 et 14, **caractérisé en ce que** la couche (3) est disposée comme couche moyenne entre la couche de fibres sous-jacente (2) et la couche de recouvrement en fibres (4) et la couche de fibres sous-jacente (2), la couche (3) et la couche de recouvrement en fibres (4) sont réalisées à partir de fibres de verre.

17. Structure stratifiée selon la revendication 16, **caractérisé en ce que** la couche de fibres sous-jacente (2) et la couche de recouvrement en fibres (4) sont réalisées à partir de brins coupés avec un grammage d'environ 250 g/m² à environ 300 g/m².

18. Procédé de fabrication d'une structure stratifiée (1) destinée à la fabrication de matériaux renforcés par des fibres, **caractérisé en ce que** l'on volumise des fibres de verre (6) par cardage et on les dépose en une couche (3) et **en ce que** l'on consolide la couche (3) à la machine textile.

19. Procédé selon la revendication 18, **caractérisé en ce que** l'on introduit des matières de remplissage (7) entre les fibres de verre volumisées (6) de la couche (3) et **en ce que** l'on consolide à la machine textile la couche (3) complétée avec les matières de remplissage (7).

20. Procédé selon la revendication 18 ou 19, **caractérisé en ce que** l'on coupe les fibres de verre (6) au moyen d'un dispositif de coupe (11) avant leur volumisation.

21. Procédé selon la revendication 20, **caractérisé en ce que** l'on coupe les fibres de verre (6) à une longueur définie au moyen d'un dispositif de coupe (11) avant leur volumisation.

22. Procédé selon la revendication 20 ou 21, **caractérisé en ce que** l'on présente les fibres de verre coupées (6), avant leur volumisation, à un dispositif de cardage (12) uniformément sur toute la largeur de travail du dispositif de cardage (12).

23. Procédé selon l'une quelconque des revendications 18 à 22, **caractérisé en ce que**, avant la consolidation à la machine textile, on amène les fibres de verre (6) principalement dans une orientation d'environ 0° ou d'environ 90° par rapport à une direction de transport (B) de la couche (3) lors de la consolidation de la structure stratifiée (1) à la machine textile.

24. Procédé selon l'une quelconque des revendications 18 à 23, **caractérisé en ce que** l'on dépose la couche (3) en mosaïque.

25. Procédé selon l'une quelconque des revendications 18 à 24, **caractérisé en ce que** l'on dépose la couche (3) sur une couche de fibres sous-jacente (2).

26. Procédé selon la revendication 19, **caractérisé en ce que** l'on répand les matières de remplissage (7) sur la couche déposée (3) au moyen d'un dispositif de dépôt de matières de remplissage (16).

27. Procédé selon l'une quelconque des revendications 18 à 26, **caractérisé en ce que** l'on dépose une couche de recouvrement en fibres (4) sur la couche (3) avant la consolidation à la machine textile.

28. Procédé selon l'une quelconque des revendications 18 à 27, **caractérisé en ce que** l'on produit la structure stratifiée (1) dans un processus de travail continu sur une installation (10).

29. Procédé selon l'une quelconque des revendications 18 à 28, **caractérisé en ce que**
dans une première étape, on apporte des brins, des fils et/ou des retors en fibres de verre (6) dans un dispositif de coupe (11), on les y coupe et on dépose les fibres de verre coupées (6) sur un dispositif de transport (9),
dans une deuxième étape, on volumise les fibres de verre (6) mécaniquement au moyen d'un dispositif de cardage (12) et on les oriente,
dans une troisième étape, on dispose en mosaïque, au moyen d'un dispositif de pose transversal (15), les fibres de verre (6) volumisées (6) sur une couche de fibres sous-jacente (2) formée à partir d'une couche de fibres embrouillées,
dans une quatrième étape, on répand des matières de remplissage (7) sur la pile stratifiée (2, 3) au moyen d'un dispositif de dépôt de matières de remplissage (16),
dans une cinquième étape, on dépose une couche de recouvrement en fibres (4) sur la pile stratifiée (2, 3), et
on consolide les couches (2, 3, 4) dans une sixième étape sur un métier rectiligne (18).
